# EUROPEAN PATENT APPLICATION

(11) **EP 4 790 684 A1**
(43) Date of publication of application: **12.08.2026**
(21) Application number: 26154795.4
(22) Date of filing: 28.01.2026
(51) Int. Cl.: G09B 19/00

(54) **METHOD AND COMPUTER FOR MANAGING FITTING BETWEEN A GOLF CLUB AND A GOLF PLAYER**

(30) Priority: 07.02.2025 SE 2550120
(71) Applicant: Topgolf Sweden AB, 182 33 Danderyd (SE)
(72) Inventor: RIDDERSPORRE, Johan, 146 52 Tullinge (SE)
(74) Representative: Noréns Patentbyrå AB

(57) **Abstract**

A method and a computer (110) for managing fitting between a golf club (4) and a golf player (3) are disclosed. The computer (110) obtains (A110) a measured ball speed, a measured ball launch angle, and a measured ball distance, obtained by a tracking device (140). The computer (110) uses (A130) at least one of a computed ball spin and the measured ball launch angle as input to a fitting model that defines interdependencies among a set of parameters for the measured ball speed to generate (A140) one or more recommendations regarding the golf club and/or one or more swings based on the fitting model. The generating (A150) of said one or more recommendations is performed iteratively, until a difference between two or more of the measured ball distance, the maximum distance and a subsequent measured ball distance for said one or more subsequent golf shots satisfies a threshold.

## Description

### TECHNICAL FIELD

The embodiments herein relate to golf, such as how to select a golf club, how to swing to make best use of a golf club, or the like. In particular, a computer-implemented method and a computer for fitting between a golf club and a golf player are disclosed. A corresponding computer program and a carrier therefor are also disclosed.

### BACKGROUND

When playing golf, a goal for players can be to select a driver that delivers the longest possible shot. Achieving this can involve maximizing either the carry distance, i.e. the distance the ball travels through the air before touching the ground, or the shot distance, which includes both the carry and the subsequent movement along on the ground, e.g. while bouncing and/or rolling and/or the like. Although these two objectives may seem different, the underlying physics and principles governing them are fundamentally the same. Both rely on optimizing energy transfer from the golf club, being swung, and the ball to achieve the favorable flight characteristics that results in the longest shot possible.

Accordingly, selecting an appropriate golf club, such as a driver, is a critical factor in enhancing the performance of a golf player on the golf course. However, this process is often approached in a haphazard or trial-and-error manner, relying heavily on guesswork and personal intuition rather than a systematic, data-driven methodology. This lack of precision can lead to suboptimal results, as golfers may fail to select the golf club that best suits their unique swing dynamics and/or as golfers may fail to adjust their swing to get the most out of their golf club, e.g. achieve the longest possible shots. A more systematic approach to driver selection could help golfers make informed decisions, leading to improved consistency and better outcomes on the course.

A factor influencing the carry distance is the spin rate of the golf ball. The spin rate affects the ball's lift, trajectory, and stability in flight, all of which contribute to the overall distance. A well-optimized spin rate can imply the difference between a shot that falls short and one that soars to its maximum potential. However, in many practical situations, accurately measuring the spin rate is either impossible, impractical or required specialized equipment, e.g. in terms of balls, tracking devices, and/or the like. This limitation creates a challenge for golfers and fitters seeking to optimize driver performance without access to a current spin rate of a shot under observation.

### SUMMARY

An object is to alleviate, or eliminate, one or more of the problems and/or disadvantages mentioned herein.

In some embodiments herein, this challenge is addressed by providing a method and a computer implementing a systematic and reliable approach to fitting, even in situations where accurate spin measurements are unavailable. As used herein, fitting refers to fitting between the golf club and the golf player, i.e., fitting the golf club to the golf player and/or fitting a swing, or a set of swings, performed by the golf player to the golf club and/or the like. By leveraging fundamental laws of physics, and empirical data, some embodiments herein enable golfers to make informed decisions about golf club selection, focusing on factors that can be readily measured or estimated and/or swing adjustments. Some embodiments herein ensure that players can achieve their optimal distance, or at least closer to the optimal distance, without being hindered by the lack of direct spin rate measurements, ultimately enhancing their performance and enjoyment of the game. The optimal distance can refer to a ball carry distance and/or a total shot distance as explained in more detail herein.

According to an aspect, the object is achieved by a method, performed by a computer, for managing fitting between a golf club and a golf player.

The computer obtains access to a physics model that defines interdependencies among a set of variables, being measurable by a tracking device, relating to shots of golf balls. The set of variables includes a ball spin variable, a ball speed variable, a ball launch angle variable, and a ball distance variable.

The computer obtains a measured ball speed, a measured ball launch angle, and a measured ball distance, which have been obtained, e.g. measured, or the like, by the tracking device. The measured ball speed, the measured ball launch angle, and the measured ball distance relate to a set of observed golf shots, performed by the golf player.

The computer computes a ball spin, referred to as "computed ball spin", by use of the physics model, the measured ball speed, the measured ball launch angle and the measured ball distance.

The computer uses at least one of the computed ball spin and the measured ball launch angle as an input to a fitting model that defines interdependencies among a set of parameters for the measured ball speed. The set of parameters includes a ball launch angle parameter, a ball spin parameter, a distance parameter, and the like. The computer generates one or more recommendations regarding the golf club and/or one or more swings performed by the golf player when making the set of observed golf shots based on the fitting model. Said one or more recommendations include adjustments related to one or more of: a loft of the golf club, a shaft type of the golf club, a characteristic of a head of the golf club, and said one or more swings. The generating of said one or more recommendations is performed iteratively to evaluate one or more subsequent golf shots, performed by the golf player after the set of observed golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.

According to yet other aspect, the object is achieved by a computer configured for managing fitting between a golf club and a golf player.

The computer is configured for obtaining access to a physics model that defines interdependencies among a set of variables, being measurable by a tracking device, relating to shots of golf balls. The set of variables includes a ball spin variable, a ball speed variable, a ball launch angle variable, and a ball distance variable.

The computer is configured for obtaining a measured ball speed, a measured ball launch angle, and a measured ball distance, which have been obtained, e.g. measured, or the like, by the tracking device. The measured ball speed, the measured ball launch angle, and the measured ball distance relate to a set of observed golf shots, performed by the golf player.

The computer is configured for computing a ball spin, referred to as "computed ball spin", by use of the physics model, the measured ball speed, the measured ball launch angle and the measured ball distance.

The computer is configured for using at least one of the computed ball spin and the measured ball launch angle as an input to a fitting model that defines interdependencies among a set of parameters for the measured ball speed. The set of parameters includes a ball launch angle parameter, a ball spin parameter, a distance parameter, and the like.

The computer is configured for generating one or more recommendations regarding the golf club and/or one or more swings performed by the golf player when making the set of observed golf shots based on the fitting model. Said one or more recommendations include adjustments related to one or more of: a loft of the golf club, a shaft type of the golf club, a characteristic of a head of the golf club, and said one or more swings.

Furthermore, the computer is configured for generating said one or more recommendations iteratively to evaluate one or more subsequent golf shots, performed by the golf player after the set of observed golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.

According to further aspects, the object is achieved by a computer program and a computer program carrier corresponding to the aspects above.

In some embodiments of the method, the computer can provide said one or more recommendations. In some examples, this can mean that the computer displays said one or more recommendations at a display device, e.g., connected to the computer, and/or that the computer sends, to a golf club managing unit, said one or more recommendations, and/or the like. The golf club managing unit can be configured to provide a golf club according to said one or more recommendations, e.g. fetch the golf club according to said one or more recommendations from a supply of golf clubs and preferably output the fetched golf club, whereby the golf club becomes accessible to the golf player for testing thereof.

In some embodiments of the computer, the computer can be configured for providing said one or more recommendations by being configured for displaying said one or more recommendations at a display device, e.g., connected to the computer, and/or sending, to a golf club managing unit, said one or more recommendations, wherein the golf club managing unit is configured to provide a golf club according to said one or more recommendations, e.g. fetch the golf club according to said one or more recommendations from a supply of golf clubs and preferably output the fetched golf club, whereby the golf club becomes accessible to the golf player for testing thereof, and/or the like.

In this manner, the method and/or the computer facilitating interaction between golf player and the golf club managing unit, while enabling the computer and golf club managing unit to work in concert to enhance the fitting experience. The recommendations may be based on advanced algorithms or data-driven insights, ensuring that the selected golf club aligns with the player's specific needs and preferences. This integration of computational capabilities and automated club retrieval simplifies the fitting process, minimizes manual effort, and provides the player with immediate access to tailored equipment for testing and refinement.

The following embodiments can be applied to the various aspects mentioned above.

In some embodiments, the ball distance variable comprises a ball carry distance variable and/or a shot distance variable and/or the like. As an example, the ball distance variable can refer to the ball carry distance and/or the shot distance variable. By referring to carry distance, shot distance, and/or the like, it is ensured that users, e.g., golf players, athletes, coaches, pros, or the like, can receive the appropriate information that aligns with their specific focus areas. In this manner, usability is enhanced. By use of standardized terms like carry distance and shot distance, at least some embodiments are allowed to be compared across different systems, or computers according to the embodiments herein, or users. In this manner, consistency in evaluations can be achieved. Sometimes, the ball distance variable is referred to as the ball distance or the distance.

In some embodiments, the measured ball distance refers to a measured ball carry distance and/or a measured shot distance. As an example, the measured ball distance can comprise the measured ball carry distance and/or the measured shot distance and/or the like.

In some embodiments, the maximum distance refers to a maximum carry distance and/or a maximum shot distance. As an example, the maximum distance can comprise the maximum carry distance and/or the maximum shot distance and/or the like.

In some embodiments, the threshold refers to a first threshold for maximum allowed carry distance difference and/or a second threshold for maximum allowed shot distance difference and/or the like. As an example, the threshold indicates when to stop iterating the generation of the recommendations, e.g. due to the fact that an achieved ball distance value is deemed to be sufficiently close to the maximum distance.

In some embodiments, the physics model defines the interdependencies among the set of variables except the ball speed variable, for each ball speed value of a set of ball speed values selected for the ball speed variable. As an example, the physics model can correlate spin, ball distance, launch angle to each other for said each ball speed value. In this manner, the ball spin can be derived from the ball speed, the ball launch angle, and ball distance (ball carry distance and/or shot distance and/or the like) by means of the physics model.

In some embodiments, the set of variables comprises a loft variable. The loft variable can influence launch characteristics of a ball, such as the launch angle and the spin rate. For instance, changes in the loft variable can directly affect the launch angle of a ball, providing valuable insights into how adjustments to loft settings impact overall ball trajectory. For example, the inclusion of the loft variable can also enable the development of models, such as a driver fitting model, which define the interdependencies between loft, launch angle, and spin rate. The driver fitting model can facilitate identification of preferred launch angles and corresponding spin rates to achieve desired performance objectives, such as maximizing the ball carry distance and/or the shot distance. By capturing these relationships, at least some embodiments offer a robust framework for tailoring equipment or swing technique to specific performance goals, thereby enhancing overall effectiveness and precision in ball flight optimization.

In some embodiments, the shaft type of the golf club is categorized as one or more of: a low-, a mid-, or a high-launch type, and a low-, a mid-, or a high-spin type, and/or a combination thereof. As an example, the shaft type of the golf club can be categorized based on its performance characteristics as one or more of a low-, mid-, or high-launch type, and a low-, mid-, or high-spin type. This categorization allows for a detailed understanding of how different shaft characteristics influence ball flight dynamics, including launch angle and spin rate. By incorporating the classifications, at least some embodiments can employ a fitting model that considers the combined effects of shaft properties. This model provides tailored recommendations for optimizing performance by mapping the relationships between launch and spin characteristics onto a three-dimensional trajectory graph. Users can leverage these insights to make informed adjustments to equipment or swing technique, facilitating movement within the trajectory space to achieve specific performance objectives, such as maximizing carry distance, optimizing shot distance, and/or achieving consistent shot patterns. This approach enhances the precision and personalization of golf club fitting, ensuring that recommendations align with the unique requirements of individual players.

In some embodiments, the kick-point of the golf club relates to a location along the golf club's shaft where the shaft flexes the most during swinging of the golf club. As an example, the kick-point of the golf club can refer to a specific location along the shaft where the maximum flex occurs during the swinging motion of the golf club. This characteristic plays a role in determining the dynamic behavior of the shaft during a swing, influencing factors such as the launch angle, spin rate, and overall trajectory of the ball. By identifying and considering the kick-point, at least some embodiments enable adjustments to the shaft design or selection process to align with a player's swing dynamics and performance objectives. A higher kick-point may promote a lower ball trajectory, while a lower kick-point can facilitate a higher launch. This flexibility allows for the customization of golf clubs to suit varying player preferences, swing speeds, and desired shot outcomes, thereby enhancing the effectiveness of equipment fitting and performance optimization. In some embodiments, said one or more recommendations include advising the golf player to try a golf club with a specific shaft type, such as a medium-launch, high-spin shaft.

In some embodiments, a characteristic of the head of the golf club relates to spin capability of the head of the golf club. As an example, a characteristic of the head of the golf club can be characterized as a low-, mid-, or high-spin head of the golf club. As an example, a golf club manufacturer can provide two or more versions of a golf club, where the different versions differ in terms of the head installed. E.g. a low-spin head can be installed at the shaft of the golf club, a high-spin head can be installed at the shaft of the golf club, etc. A characteristic of the head of the golf club can be a club head model, e.g. identified by an article number, a type number, or a low-, mid-, high-spin identification, such as a LS (low spin), MS (mid spin), HS (high spin), or the like. Some golf club heads can have variable weights or movable weights that will modify the center of gravity that can modify the spin characteristics of the club head. In some examples, the characteristics of the head of the golf club can be adjusted by a person, such as the golf player, a caddy, a pro, or the like. As an example, the golf club can be configured, such as designed, constructed, or the like, to be adjustable, i.e. one or more characteristics of the golf club can be adjustable. Said one or more characteristics can refer to that a center of gravity of the club head can be adjusted, e.g. by removing, replacing, and/or changing weights removably fixable to the head of the golf club. Additionally or alternatively, said one or more characteristics can refer to that, e.g. a loft of the golf club can be changed.

In some embodiments, the golf club is a driver golf club, or "driver" for short. A driver is typically designed for use on a tee box to achieve maximum distance on an initial shot of a hole, such as the very first shot, a drive shot from the fair way, or the like. This type of golf club is characterized by its large clubhead, low loft angle, and long shaft, which together facilitate high-speed swings and the generation of significant ball velocity. By focusing on the driver as a specific embodiment, some embodiments address the performance characteristics and optimization opportunities associated with this club type, such as maximizing carry distance, controlling launch angle, and achieving consistent trajectory patterns, while other club types can sometimes be easier to fit and/or less influencing on performance on the golf course.

### BRIEF DESCRIPTION OF THE DRAWINGS

The various aspects of embodiments disclosed herein, including particular features and advantages thereof, will be readily understood from the following detailed description and the accompanying drawings, which are briefly described in the following.
Figure 1 is a schematic overview for illustration of the embodiments herein.
Figure 2 is a flowchart illustrating embodiments of the method herein, e.g. performed by the computer.
Figure 3 is a diagram illustrating a 3D-graph with ball distance as a function of ball spin and launch angle.
Figure 4 is a block diagram illustrating embodiments of the computer.

### DETAILED DESCRIPTION

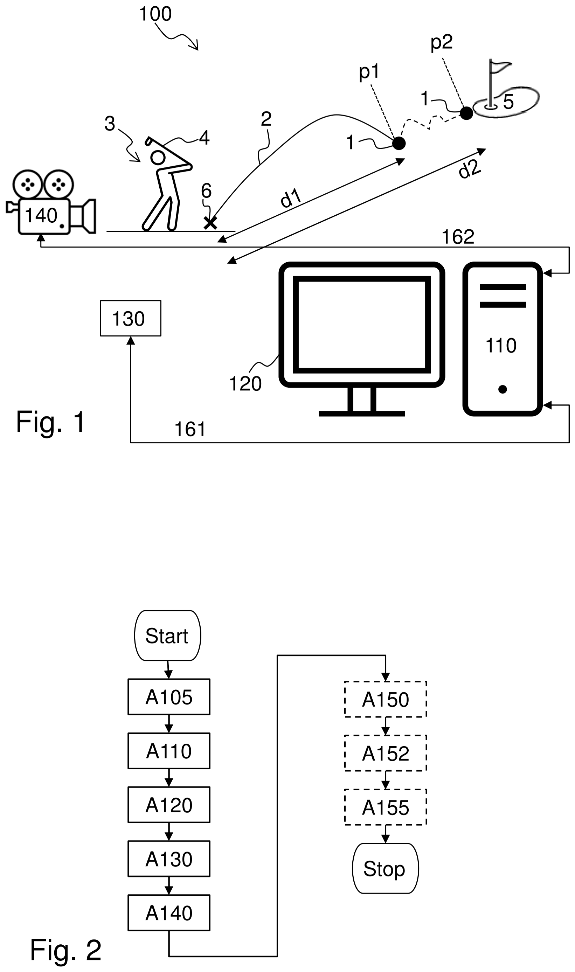

Figure 1 illustrates an example of a system 100 for fitting between a golf player 3 and a golf club 4. The golf player 3 can be practicing golf on a golf course, a range, a practicing area, or the like, that can be located indoors, outdoors, or the like. The golf player 3 can swing the golf club 4 to shoot a ball 1, e.g. towards a target 5, or randomly without any specific target. Depending on the golf club 4 in use, by the golf player 3, and the golf player's 3 skill, a ball shot by the golf player 3 travels a ball distance d1, d2.

Typically, the ball distance d1, d2 can be a ball carry distance d1 and/or a shot distance d2 and/or the like. The ball carry distance d1 can typically span between a launch position 6 of the ball 1 and a point p1 where the ball first hits the ground, e.g. the golf course, the range or the like. The shot distance d2 can typically span between the launch position 6 and a point p2 where the ball remains stationary after being shot. The launch position 6 can be located in a range bay, at a tee, on a fairway of a golf course, or the like.

The system 100 can comprise a computer 110 configured to implement one or more of the embodiments herein. The computer 110 can be a personal computer, a stationary computer, a server computer, a rack with processing devices, a processing unit, or the like.

The computer 110 can be connected, using wired or wireless technologies, to a display device 120, such as a computer screen, a monitor, a flatscreen, a TV, a projector, or the like.

The system 100 can comprise a golf club managing unit 130 configured to provide a golf club. E.g. a command can be sent to the golf club managing unit 130. The command can indicate a particular golf club, e.g. by an assigned number. The command can indicate the desired properties of the golf club, such as shaft type of the golf club, a loft of the golf club, a length of the shaft, a weight of the golf club, and/or the like. Upon receiving the command, the golf club managing unit 130 can, e.g. fetch the golf club according to the command a supply of golf clubs, and preferably output the fetched golf club.

The system 100 can comprise a tracking device 140, such as a tracker, a tracker sensor, a golf ball tracking device, or the like, e.g., configured for tracking of golf balls. Various known tracking units are available on the market today. As used herein, the term "golf balls" refers to golf balls in general. For example, the golf balls can be the same or other golf balls. At a range, the golf balls being shot are typically different for each shot, but it is also possible to practice with just one golf ball that is retrieved and used, again and again. Therefore, "golf balls" can refer to the same golf balls and/or to other golf balls.

The computer 110 can be connected 161, 162, using wired or wireless data communication technologies, to the golf club managing unit 130 and/or the tracking device 140.

Figure 2 shows an exemplifying method for managing fitting between a golf club 4 and a golf player 3. Sometimes, the golf club 4 is a so called driver for making shots with a relatively long distance, e.g. above 100 m. The computer 110 can perform the method, e.g. the method is a computer-implemented method.

In some examples, there is provided a method for fitting the golf club to the golf player and/or for prompting the golf player to act differently to achieve longer golf shots with the golf club 4.

As used herein, the expression "perform a shot", "perform a golf shot" can refer to a golf player hitting, taking, striking, or the like, a golf shot.

One or more of the following actions can be performed, e.g. in the order as below or in any other suitable order when applicable.

### Action A105

The computer 110 obtains, such as receives, gains, or the like, access to a physics model that defines interdependencies among a set of variables, being measurable by a tracking device 140, relating to shots of golf balls. The shots of golf balls can be performed, such as hit, shot, struck, or the like, by golf players, e.g. in general, or the golf player, or even a robot or machine capable of shooting golf balls. The set of variables includes a ball spin variable, a ball speed variable, a ball launch angle variable, and a ball distance variable. The physics model is a simulation model taking e.g. gravity, friction, flight trajectory dynamics, weather conditions, topography, and/or the like, into account in order to define relationships and/or interdependencies between the set of variables.

As mentioned, the physics model can describe interdependencies among the set of variables, including, but not limited to, the aforementioned variables, for sport projectiles such as golf balls, wherein any one of the variables is derivable from the others. These interdependencies enable the physics model to predict or simulate the behavior of a golf ball, such as a flight trajectory thereof, under varying conditions, making it a valuable tool for both performance analysis and equipment adjustment.

The ball spin variable indicates spins of golf balls of the golf shots on which the physics model is based. Spin can affect the lift and drag forces acting on the ball during flight, influencing its trajectory, carry distance, and ability to stop or roll upon landing. By modeling spin, the physical model can account for these aerodynamic effects, providing a comprehensive understanding of ball flight dynamics.

The ball speed variable indicates ball speeds of golf balls of the golf shots on which the physics model is based. Ball speed can be determinant of distance and energy transfer efficiency, and its relationship with other variables, such as launch angle and spin, is used to determine shot outcomes. This variable can also reflect the quality of the impact between the clubface and the golf ball.

The ball launch angle variable indicates ball launch angles of the golf shots on which the physics model is based. Launch angle, in combination with spin and ball speed, determines the initial trajectory of the ball, playing a role in achieving desired distances and shot shapes, or trajectory shapes. Variations in launch angle can also be used to tailor shots to specific conditions, such as wind or terrain.

The ball distance variable indicates distances of the golf shots on which the physics model is based. The ball distance can be the ball carry distance and/or the shot distance. The ball distance is the result of the interplay among spin, speed, and launch angle, and serves as a metric for evaluating shot effectiveness. The physics model's ability to link distance to these underlying variables provides actionable insights for improving consistency and accuracy in shot execution.

As an example, this action can be performed well in advance, e.g. a part of a setup and/or configuration procedure. For example, the computer 110 can obtain, such as read, download, or the like, the physics models from a storage, such as a memory, a data base, or the like. The storage may be internal or external with respect to the computer 110.

### Action A110

The computer 110 obtains a measured ball speed, a measured ball launch angle, and a measured ball distance, which have been obtained, e.g. measured, or the like, by the tracking device 140. The measured ball speed, the measured ball launch angle, and the measured ball distance relate to a set of observed golf shots, performed by the golf player 3. The set of observed shots can be performed using golf balls, i.e. the observed shots relate to shooting of golf balls. In more detail, a set of indicators, comprising the measured ball speed, the measured ball launch angle, and the measured ball distance, can be obtained, such as received, from the golf ball tracking device 140, which - as mentioned - can measure the set of indicators. In some examples, the tracking device 140 can send the set of indicators to a storage device from which the computer 110 can fetch the set of indicators. The storage device can be internal or external with respect to the tracking device 140 and/or the computer 110. The storage device can thus be a memory, a data base, and/or the like.

In some examples, the set of observed shots is a plurality of observed golf shots. Outlier golf shots can be filtered out from the plurality of observed golf shots, i.e. before the measured ball speed, the measured ball launch angle, and the measured ball distance is computed. This means, for example, that the computer 110 can compute the measured ball speed, the measured ball launch angle, and the measured ball distance based on individual data of ball speed, ball launch angle, and ball distance, for each of the plurality of observed golf shots, i.e. excluding the outliers.

Advantageously, this kind of pruning, e.g. exclusion of outliers, or the like, improves accuracy of the method herein.

### Action A120

The computer 110 computes a ball spin, referred to as "computed ball spin", by use of the physics model, the measured ball speed, the measured ball launch angle and the measured ball distance. As an example, the computer 110 can thus determine the computed ball spin by inputting the set of indicators to the physics model, which then derives the computed ball spin.

### Action A130

The computer 110 uses at least one of the computed ball spin and the measured ball launch angle as an input to a fitting model that defines interdependencies among a set of parameters for the measured ball speed. The set of parameters includes a ball launch angle parameter, a ball spin parameter, a distance parameter, and the like. The fitting model can also be named an interaction model because it can model how of a golf player interacts with the golf club in a most suitable manner, i.e. by selecting an appropriate golf club and/or adjusting their swing. The fitting model can comprise a club fitting model for modelling of how to select an appropriate golf club and/or a swing fitting model for modelling of how to adjust the swing and/or the like. For example, in case the golf player 3 wants to try out new clubs, e.g. to buy new ones, the fitting model could preferably be the club fitting model. For example, in case the golf player 3 wants to play better with their existing clubs, the fitting model could preferably be the swing fitting model.

With the given input, the computer 110 can proceed to action A140 in order to generate recommendations, e.g. the below mentioned one or more recommendations, by means of the fitting model.

### Action A140

The computer 110 generates one or more recommendations regarding the golf club and/or one or more swings performed by the golf player 3 when making the set of observed golf shots based on, e.g. by use of, the fitting model and optionally at least one of the computed ball spin and the measured ball launch angle. This means that the fitting model can output said one or more recommendations based on input including said at least one of the computed ball spin and the measured ball launch angle. Said one or more recommendations include adjustments related to one or more of: a loft of the golf club 4, a shaft type of the golf club 4, a characteristic of a head of the golf club 4, and said one or more swings.

The computer 110 performs the generating A150 of, i.e. the generation of, said one or more recommendations iteratively to evaluate one or more subsequent golf shots, performed by the golf player 3 after the set of observed golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.

In some embodiments, the difference satisfies the threshold when a desired difference between the maximum distance and the measured ball distance for the set of observed shots and/or for said one or more subsequent golf shots is less than a desired threshold for maximum allowed distance difference. In this manner, the iteration stops, or pauses, when the golf player 3 achieves the measured ball distance for the set of observed shots and/or for said one or more subsequent shots that is sufficiently close to, e.g. as defined by the desired threshold, the maximum distance.

As an example, the generating A150 is performed iteratively until the desired difference between the measured ball distance and the maximum distance is less than a threshold for maximum allowed distance difference. The threshold can be 0-50 m, 1-25 m, 5-10 m, 5 m, 7 m, 10 m, 15 m, 30 m, or the like. Expressed differently, the threshold can be 20%, 15%, 10%, 5%, 3%, 2%, 1%, or the like of the maximum distance.

In some embodiments, the difference satisfies the threshold when an improvement difference between the measured ball distance for the set of observed golf shots and the subsequent measured ball distance for said one or more subsequent golf shots is greater than an improvement threshold for minimum required improvement of the improvement difference. In this manner, the iteration stops, or pauses, when the golf player 3 achieves the subsequent measured ball distance, with said one or more subsequent golf shots, that is improved sufficiently, e.g. as defined by the improvement threshold, compared to the measured ball distance of the set of observed shots.

As an example, the generating A150 is performed iteratively until the improvement difference between the measured ball distance and the subsequent measured ball distance is greater than a threshold for minimum required distance difference. The threshold can be 0-50 m, 1-25 m, 5-10 m, 5 m, 7 m, 10 m, 15 m, 30 m, or the like.

The threshold relating to the measured ball distance and/or the subsequent measured ball distance and/or the maximum distance can be e.g.:
- a percentage of the maximum distance, e.g. 20%, 15%, 10%, 5%, 3% or the like, and
- a percentage of the measured ball distance, e.g. 105%, 110%, 120%, 130% or more, or the like.

In this manner, the fitting model is used in combination with at least one of the computed ball spin and the measured ball launch angle in order to provide said one or more recommendations, which is projected to, or predicted to, achieve that a subsequent shot results in a subsequent distance that is closer to the maximum distance, e.g. by that the subsequent shot achieves a subsequent ball launch angle that is closer to a target ball launch angle and/or that the subsequent shot achieves a subsequent ball spin that is closer to a target ball spin. As an example, the target ball launch angle is, given a certain ball speed and a certain spin, a value of the ball launch parameter that achieves a greatest distance. As an example, the target ball spin is, given a certain ball speed and a certain ball launch angle, a value of the ball spin parameter that achieves a greatest distance.

In some examples, said one or more subsequent golf shots is a plurality of subsequent golf shots. In these examples, outlier golf shots can be filtered out from the plurality of subsequent golf shots. Advantageously, this kind of pruning, e.g. exclusion of outliers, or the like, improves accuracy of the method herein.

In more detail, as is evident from the above, the golf player 3 can perform golf shots in groups of shots, e.g. 2-20 shots, 5-15 shots, 10 shots, or the like, or any other number selected by the golf player 3. So for a first number of shots, performed by the golf player 3, the computer 110 provides said one or more recommendations. Then, the golf player 3 shoots a second number of shots, which are different shots as compared to the shots of the first number of shots, but the count of the golf shots can be the same or different. That is to say, the golf player 3 can e.g. shot 10 shots and the another 10 shots, or any other number of shots. In this manner, said one or more recommendations can become more accurate, since said one or more recommendations is based on pluralities of golf shots, such as the observed plurality of golf shots and/or the subsequent plurality of golf shots.

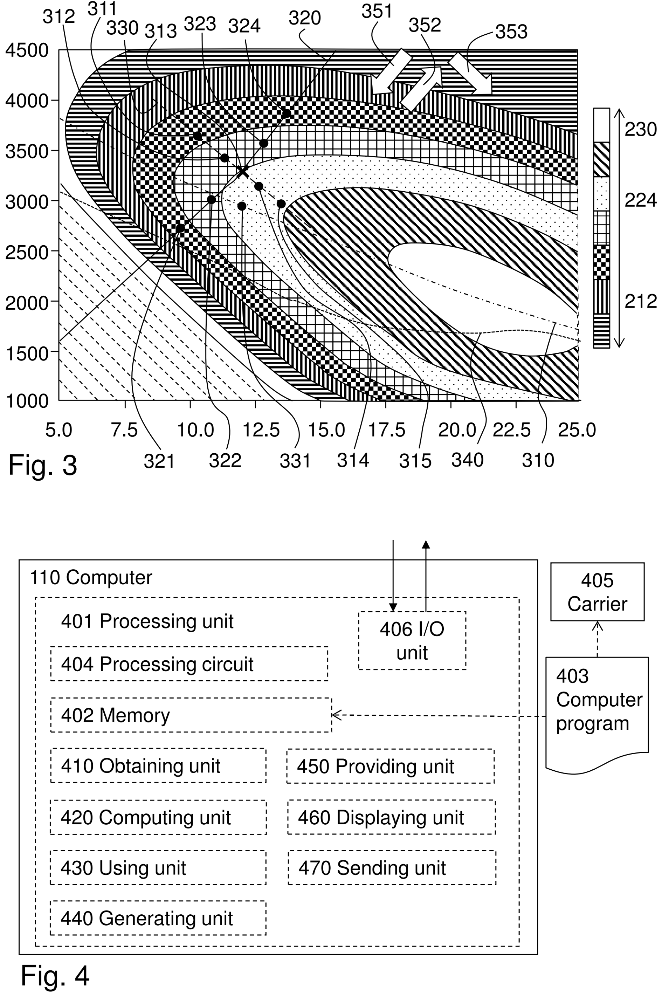

As an example, the computer 110 can use the fitting model to determine whether an adjustment of at least one of the ball spin and the ball launch angle would result in a subsequent ball distance that is greater than the measured ball distance. In case, the computer 110 determines that e.g. a reduction of the ball spin would result in a greater subsequent distance, said one or more recommendations can be to use a golf club 4 with a smaller loft. In some cases, the loft of the golf club 4 can be adjusted, e.g. by a person, such as a user, a golf player, a pro, or the like, or even by a machine. In some examples, it may be more complex. In general, it can be preferred that said one or more recommendations results in that subsequent golf shots result in that the spin, speed and loft angle combination for that golf shot has moved downwards and to the right as seen in Figure 3. See also further examples below.

In some examples, the computer 110 performs the obtaining A110 of the measured ball speed, the measured ball launch angle, and the measured ball distance iteratively to obtain a respective measured ball speed, a respective measured ball launch angle, and a respective measured ball distance for each iteration, i.e. for each of said one or more subsequent golf shots, performed by the golf player 3 after the set of observed golf shots.

In some examples, the computer 110 obtains the measured ball speed, the measured ball launch angle, and the measured ball distance for the set of observed shots and the respective measured ball speed, the respective measured ball launch angle, and the respective measured ball distance for each of said one or more subsequent golf shots, e.g. before generation said one or more recommendations for said one or more subsequent shots.

In this manner, said one or more recommendations can be made more reliable by that said one or more recommendations are based on a plurality of golf shots, rather than a single golf shot.

In these examples, action A130 can be performed by that the computer 110 uses at least one of the computed ball spin and the measured ball launch angle for the set of observed shots and for said one or more subsequent shots as the input to the fitting model.

In some embodiments, a kick-point of the golf club 4 relates to a location along the golf club's 4 shaft where the shaft flexes the most during swinging of the golf club 4. A low kick-point of the golf club 4 can imply a higher launch angle is achieved than a launch angle achieved with golf club 4 having a kick-point higher than the low kick-point.

In some embodiments, a stiffness of the shaft of the golf club 4 relates to how stiff the shaft is, e.g. how difficult or easy it is to bend the shaft. A shaft of the golf club 4 can thus have a particular stiffness, e.g. expressed as 1-10, low-stiff, mid-stiff, high-stiff, or the like. The stiffness of a golf club shaft, or its flex, significantly impacts performance, influencing trajectory, accuracy, and distance. Common flex options range from extra stiff for players with very high swing speeds to more flexible options like regular, senior, and ladies' shafts, suited for slower swings. A stiffer shaft generally produces lower trajectories and reduced spin, while a softer shaft promotes higher launch and more spin, aiding distance for slower swingers.

In some embodiments, the shaft type of the golf club 4 is categorized as one or more of: a low-, a mid-, or a high-launch type, and a low-, a mid-, or a high-spin type. The low-launch type of the shaft types can imply a lower launch angle is achieved with this shaft type than a launch angle achieved with the high-launch type of the shaft type.

A shaft of a golf club can be categorized into any one of the categories low-, mid-, high-launch type, or low-, mid-, or high-spin type due to its combination of shaft stiffness and kick-point. E.g. a high stiffness and high kick-point golf club would normally be categorized as low-launch type.

In some embodiments, a characteristic of the head of the golf club 4 can refer to the head's capability to achieve spin at the golf ball 1. As an example, a characteristic of the head of the golf club can be characterized as a low-, mid-, or high-spin head of the golf club. As an example, a golf club manufacturer can provide two or more versions of a golf club, where the different versions differ in terms of the head installed. E.g. a low-spin head can be installed at the shaft of the golf club, a high-spin head can be installed at the shaft of the golf club, etc. A characteristic of the head of the golf club can be a club head model, e.g. identified by an article number, a type number, or a low-, mid-, high-spin identification, such as a LS, MS, HS, or the like.

### Action A150

The computer 110 can provide said one or more recommendations by performing one or more of subsequent actions A152, A155, or the like.

### Action A152

The computer 110 can display said one or more recommendations at a display device 120, e.g., connected to the computer 110. In this manner, the golf player 3 receives feedback and instructions according to said one or more recommendations by means of which the golf player 3 can make a decision concerning which golf club 4 to use for subsequent shots and/or how to adjust their swing in subsequent shots. As an example, said one or more recommendations include advising the golf player 3 to try a golf club with a specific shaft type, such as a medium-launch, high-spin shaft, e.g. as displayed on the display device 120.

As an example, said one or more recommendations include advising the golf player 3 to try to swing more upwards or downwards. In this manner, the angle of attack and/or spin of the shot can be adjusted, e.g. to increase distance of the shot.

### Action A155

The computer 110 can send said one or more recommendations to a golf club managing unit 130. The golf club managing unit 130 may be configured to provide a golf club according to said one or more recommendations, e.g. fetch the golf club according to said one or more recommendations from a supply of golf clubs and preferably output the fetched golf club, whereby the golf club becomes accessible to the golf player 3 for testing thereof, e.g. in subsequent shots.

In some embodiments, the set of variables includes a loft variable. In this manner, the physics model is improved in order to also take into account changes and/or adjustments to an angle of the loft of the golf club.

Consider the following exemplifying scenario, the golf ball path is tracked in 3D-space, but the spin is not measured. Instead, the physics model is used. By means of the physics model a golf ball flight trajectory can be calculated based on a set of launch parameters, including the measured ball speed, the measured ball launch angle, and the measured ball distance.

By inputting the set of launch parameters into the physics model the spin can be determined. The spin derived in this fashion using the physics model can then be used as an input in the fitting model, aka fitting model. The fitting model can then provide the golf player 3 with said one or more recommendations, e.g., "Try a shaft with higher kick-point." etc., until an optimal, or almost optimal, configuration has been found. The configuration refers to e.g. a selection of a suitable golf club (e.g. driver) and/or adaption of a swing, or swings, performed by the golf player 3 given a certain golf club 4.

In the diagram below, a recorded shot 313 had a carry of 224.1m, a ball speed of 152 mph, and a launch angle of 12 degrees, which were all measured values. Given these values, the physics model can be used to backward compute that the spin for the shot is approximately 3284 rpm. See shot, or point, 313 in Figure 3.

The different patterns in Figure 3 show, for the given ball speed of 152 mph, how far the shot would have carried, i.e., area with the same pattern, for different launch angles and spins.

A first line 310 runs diagonally, e.g. between lower right region and upper left region. The first line 310 represents a longest ball carry distance, i.e. the maximum carry distance, for each launch angle. A fourth line 340 represents a longest total distance, i.e. the maximum shot distance, for each launch angle. Thus, the goal of the driver fitting is to end up close to the first line 310, and optimally in the space between the first line 310 and a fourth line 340.

The loft of a golf club, associated with the loft variable, refers to the angle between the club's face and a vertical line, i.e. when positioning and/or orienting the club as intended for normal use, and plays a crucial role in determining the trajectory and distance of a golf shot. Generally, golf clubs with higher lofts will launch the ball at a higher angle, i.e. at higher launch angles, while golf clubs with lower lofts will produce lower trajectory shots, i.e. with low launch angles. For a driver, the loft is typically in the range of 8-12 degrees. The lower loft of the driver helps the golf player 3 to achieve longer shots.

If the loft of a golf club is changed, typically the spin also changes. A second line 320 in Figure 3 shows how the launch angle and the spin change when the loft of the golf club 4 changes, e.g. increased loft implies increased spin and/or increased launch angle. It should be noted that while there is a general correlation between the loft and the launch angle, the launch angle is also influenced by other factors, such as the golfer's swing, an angle of attack, and the properties of the golf ball. The angle of attack can be given by a difference in direction between a movement direction of the golf club's head and a reference direction, such as a horizontal or vertical direction. However, the loft influences the launch angle to a greater extent than e.g. the properties of the golf ball.

A third line 330 in Figure 3 illustrates that if the golf player 3 hits more upwards, the spin will decrease and the launch angle will increase, and e.g. the recorded shot 313, having carry 224.1 m, would move downwards and right-wards along the third line 330. Then, the ball carry distance would increase to 225.5 m at a point 314, to 227.9 m at a point 315, and so on. Thus, aforementioned one or more recommendations can be to instruct the golf player 3 to "Try to hit more upwards", as indicated by an arrow 353.

In some examples, where the golf player 3 is above, or even high above, the first line 310, said one or more recommendations can be "Try a driver with decreased loft", i.e., effectively moving down along the second line 320. Conversely, in some examples, where the golf player 3 is below, or even far below, the first line 310, said one or more recommendations can be "Try a driver with increased loft", i.e., effectively moving up along the second line 320.

As mentioned, shafts are usually characterized as low-, mid-, or high-launch, and as low-, mid- or high-spin. Thus, different shaft types of the golf club 4 can be used to move within the graph left-right (launch) or down-up (spin), and recommendations can be made, such as "Try a club with medium-launch, high-spin shaft, such as driver model XYZ123".

*Legend to reference numerals in* *Figure 3**:*
First line 310
Second line 320:
   - 321: carry 218.0 m, (9.6, 2714)
   - 322: carry 223.2 m, (10.8/2999)
   - 323: carry 221.9 m, (12.8/3568)
   - 324: carry 218.5 m, (13.7/3853)
Third line 330:
   - 311: carry 219.2 m, (10.4/3632)
   - 312: carry 222.5 m, (11.5/3400)
   - 313: carry 224.1 m, (12.0/3284)
   - 314: carry 225.5 m, (12.6/3164)
   - 315: carry 227.9 m, (13.7/2925)
351: "Loft down" as an example of a recommendation.
352: "Loft up" as an example of a recommendation.
353: "Hit upwards" as an example of a recommendation.

By hitting several shots, as indicated by the iterative nature of the method herein, a golf player 3 can be given one or more recommendations on how to move within the graph, e.g. "Try a shaft with higher kick-point." As is well known, the term "kick-point", also known as bend point or flex point, refers to the location on a golf club's shaft where the shaft is designed to flex the most during a swing. A low kick-point on a shaft means that the shaft flexes more toward the clubhead, closer to the clubhead's end. This generally results in a higher launch angle, i.e., moving right in Figure 3. Conversely, a high kick-point means that the shaft flexes higher up towards the grip end. This typically leads to a lower launch angle, i.e., moving left in Figure 3. At least some examples of the method herein can be used to either maximize the carry of the shot or the total distance of the shot because the theory is the same, where a difference is what output value from the physics model that will be used.

With reference to Figure 4, a schematic block diagram of embodiments of the computer 110 of Figure 1 is shown.

The computer 110 can include a processing unit 401 for performing the methods described herein. The processing unit can be embodied in the form of one or more hardware units and/or one or more software units. The term "unit" may thus refer to a circuit, a software block or the like according to various embodiments as described below.

The computer 110 may further include a memory 402. The memory can include, such as contain or store, instructions, e.g., in the form of a computer program 403, which can include computer readable code units.

According to some embodiments herein, the computer 110 and/or the processing unit 401 includes a processing circuit 404 as an exemplifying hardware unit, which can include one or more processors. Accordingly, the processing unit 401 may be embodied in the form of, or 'realized by', the processing circuit 404. The instructions may be executable by the processing circuit 404, whereby the computer 110 is operative to perform the methods of Figure 2. As another example, the instructions, when executed by the computer 110 and/or the processing circuit 404, may cause the computer 110 to perform the method according to Figure 2.

In view of the above, in one example, there is provided a computer 110 configured for managing fitting between a golf club (4) and a golf player (3).

Again, the memory 402 contains the instructions executable by said processing circuit 404 whereby the computer 110 is operative for:
obtaining access to a physics model that defines interdependencies among a set of variables, being measurable by a tracking device 140, relating to shots of golf balls, wherein the set of variables includes a ball spin variable, a ball speed variable, a ball launch angle variable, and a ball distance variable,
obtaining a measured ball speed, a measured ball launch angle, and a measured ball distance, which have been obtained, e.g. measured, or the like, by the tracking device 140, wherein the measured ball speed, the measured ball launch angle, and the measured ball distance relate to a set of observed golf shots, performed by the golf player 3,
computing a ball spin, referred to as "computed ball spin", by use of the physics model, the measured ball speed, the measured ball launch angle and the measured ball distance,
using at least one of the computed ball spin and the measured ball launch angle as an input to a fitting model that defines interdependencies among a set of parameters for the measured ball speed, wherein the set of parameters includes a ball launch angle parameter, a ball spin parameter, and a distance parameter,
generating one or more recommendations regarding the golf club and/or one or more swings performed by the golf player 3 when making the set of observed golf shots based on the fitting model, wherein said one or more recommendations include adjustments related to one or more of: a loft of the golf club 4, a shaft type of the golf club 4, a kick-point of the golf club 4, and said one or more swings,
wherein the generating of said one or more recommendations is performed iteratively to evaluate one or more subsequent golf shots, performed by the golf player 3 after the set of observed golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.

Figure 4 further illustrates a carrier 405, or program carrier, which provides, such as comprises, mediates, supplies and the like, the computer program 403 as described directly above. The carrier 405 may be one of an electronic signal, an optical signal, a radio signal, a computer readable medium, a non-transitory computer readable medium, and a computer program product, and the like.

In some embodiments, the computer 110 and/or the processing unit 401 may comprise one or more of an obtaining unit 410, a computing unit 420, a using unit 430, a generating unit 440, a providing unit 450, a displaying unit 460, a sending unit 470, as exemplifying hardware units. The term "unit" may refer to a circuit when the term "unit" refers to a hardware unit. In other examples, one or more of the aforementioned exemplifying hardware units may be implemented as one or more software units, or software modules.

Moreover, the computer 110 and/or the processing unit 401 may comprise an Input/Output unit 406, which may be exemplified by the receiving unit and/or the sending unit when applicable.

Accordingly, the computer 110 is configured for managing fitting between a golf club 4 and a golf player 3.

Therefore, according to the various embodiments described above, the computer 110 and/or the processing unit 401 and/or the obtaining unit 410 is configured for obtaining access to a physics model that defines interdependencies among a set of variables, being measurable by a tracking device 140, relating to shots of golf balls. The set of variables includes a ball spin variable, a ball speed variable, a ball launch angle variable, and a ball distance variable.

The computer 110 and/or the processing unit 401 and/or the obtaining unit 410, or another obtaining unit (not shown), is configured for obtaining a measured ball speed, a measured ball launch angle, and a measured ball distance, which have been obtained, e.g. measured, or the like, by the tracking device 140. The measured ball speed, the measured ball launch angle, and the measured ball distance relate to a set of observed golf shots, performed by the golf player 3.

The computer 110 and/or the processing unit 401 and/or the computing unit 420 is configured for computing a ball spin, referred to as "computed ball spin", by use of the physics model, the measured ball speed, the measured ball launch angle and the measured ball distance.

The computer 110 and/or the processing unit 401 and/or the using unit 430 is configured for using at least one of the computed ball spin and the measured ball launch angle as an input to a fitting model that defines interdependencies among a set of parameters for the measured ball speed. The set of parameters includes set of parameters includes a ball launch angle parameter, a ball spin parameter, and a distance parameter.

The computer 110 and/or the processing unit 401 and/or the generating unit 440 is configured for generating one or more recommendations regarding the golf club and/or one or more swings performed by the golf player 3 when making the set of observed golf shots based on the fitting model. Said one or more recommendations include adjustments related to one or more of: a loft of the golf club 4, a shaft type of the golf club 4, a kick-point of the golf club 4, and said one or more swings.

The computer 110 and/or the processing unit 401 and/or the generating unit 440 is further configured for generating said one or more recommendations iteratively to evaluate one or more subsequent golf shots, performed by the golf player 3 after the set of observed golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.

The computer 110 and/or the processing unit 401 and/or the providing unit 450 may be configured for providing said one or more recommendations by that the computer 110 and/or the processing unit 401 and/or the displaying unit 460 may be configured for displaying said one or more recommendations at a display device 120, e.g., connected to the computer 110, and/or by that the computer 110 and/or the processing unit 401 and/or the sending unit 470 may be configured for sending, to a golf club managing unit 130, said one or more recommendations. The golf club managing unit 130 is configured to provide a golf club according to said one or more recommendations, e.g. fetch the golf club according to said one or more recommendations from a supply of golf clubs and preferably output the fetched golf club, whereby the golf club becomes accessible to the golf player 3 for testing thereof.

The following embodiments can be applied to any one of the embodiments of the method and/or the computer herein.

In some embodiments, the ball distance variable comprises a ball carry distance variable and/or a shot distance variable and/or the like.

In some embodiments, the measured ball distance refers to a measured ball carry distance and/or a measured shot distance and/or the like.

In some embodiments, the maximum distance refers to a maximum carry distance and/or a maximum shot distance and/or the like.

In some embodiments, the threshold refers to a first threshold for maximum allowed carry distance difference and/or a second threshold for maximum allowed shot distance difference and/or the like.

In some embodiments, the physics model defines the interdependencies among the set of variables except the ball speed variable, for each ball speed value of a set of ball speed values selected for the ball speed variable.

In some embodiments, the set of variables includes a loft variable.

In some embodiments, the shaft type of the golf club 4 is categorized as one or more of: a low-, a mid-, or a high-launch type, and a low-, a mid-, or a high-spin type.

In some embodiments, the kick-point of the golf club 4 relates to a location along the golf club's 4 shaft where the shaft flexes the most during swinging of the golf club 4.

In some embodiments, said one or more recommendations include advising the golf player 3 to try a golf club with a specific shaft type, such as a medium-launch, high-spin shaft.

In some embodiments, the golf club 4 is a driver golf club, or driver for short.

As used herein, a set of items refers to one or more items.

As used herein, the term "unit" may refer to one or more functional units, each of which may be implemented as one or more hardware units and/or one or more software units and/or a combined software/hardware unit in a node. In some examples, the unit may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing unit" may include one or more hardware units, one or more software units or a combination thereof. Any such unit, be it a hardware, software or a combined hardware-software unit, may be a determining means, estimating means, capturing means, associating means, comparing means, identification means, selecting means, receiving means, sending means or the like as disclosed herein. As an example, the expression "means" may be a unit corresponding to the units listed above in conjunction with the Figures.

As used herein, the term "software unit" may refer to a software application, a Dynamic Link Library (DLL), a software component, a software module, a software object, a React component, an object according to Component Object Model (COM), a software function, a software engine, an executable binary software file or the like.

The terms "processing unit" or "processing circuit" may herein encompass e.g. one or more processors, an Application Specific Integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a Digital Versatile Disc (DVD), a Blu-ray disc, a software unit that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

Any feature disclosed for one example and/or embodiment may be combined with one or more features disclosed for one or more other examples and/or embodiments without departing from the scope herein.

### Examples

Although the present application is defined in the attached claims, it should be understood that the present invention can also be (alternatively) defined in accordance with the following examples:
Example 1: A method, performed by a computer (110), for managing fitting between a golf club (4) and a golf player (3), wherein the method comprises
   obtaining (A105) access to a physics model that defines interdependencies among a set of variables, being measurable by a tracking device (140), relating to shots of golf balls, wherein the set of variables includes a ball spin variable, a ball speed variable, a ball launch angle variable, and a ball distance variable,
   obtaining (A110) a measured ball speed, a measured ball launch angle, and a measured ball distance, which have been obtained by the tracking device (140), wherein the measured ball speed, the measured ball launch angle, and the measured ball distance relate to a set of observed shots, performed by the golf player (3),
   computing (A120) a ball spin, referred to as "computed ball spin", by use of the physics model, the measured ball speed, the measured ball launch angle and the measured ball distance,
   using (A130) at least one of the computed ball spin and the measured ball launch angle as an input to a fitting model that defines interdependencies among a set of parameters for the measured ball speed, wherein the set of parameters includes a ball launch angle parameter, a ball spin parameter, and a distance parameter, wherein the ball launch angle parameter and the ball spin parameter are adjustable to achieve a maximum distance, and
   generating (A140) one or more recommendations regarding the golf club and/or one or more swings performed by the golf player (3) when making the set of observed golf shots based on the fitting model, wherein said one or more recommendations include adjustments related to one or more of: a loft of the golf club (4), a shaft type of the golf club (4), a characteristic of a head of the golf club (4), and said one or more swings,
   wherein the generating (A150) of said one or more recommendations is performed iteratively to evaluate one or more subsequent golf shots, performed by the golf player (3) after the set of observed golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.
Example 2: The method according to the preceding Example, wherein the method comprises:
   providing (A150) said one or more recommendations, wherein the providing (A150) comprises one or more of:
   displaying (A152) said one or more recommendations at a display device (120), and
   sending (A155), to a golf club managing unit (130), said one or more recommendations, wherein the golf club managing unit (130) is configured to provide a golf club according to said one or more recommendations, whereby the golf club becomes accessible to the golf player (3) for testing thereof.
Example 3: The method according to any one of the preceding Examples, wherein the ball distance variable comprises a ball carry distance variable and/or a shot distance variable.
Example 4: The method according to any one of the preceding Examples, wherein the measured ball distance refers to a measured ball carry distance and/or a measured shot distance.
Example 5: The method according to any one of the preceding Examples, wherein the maximum distance refers to a maximum carry distance and/or a maximum shot distance.
Example 6: The method according to any one of the preceding Examples, wherein the threshold refers to a first threshold for maximum allowed carry distance difference and/or a second threshold for maximum allowed shot distance difference.
Example 7: The method according to any one of the preceding Examples, wherein the physics model defines the interdependencies among the set of variables except the ball speed variable, for each ball speed value of a set of ball speed values selected for the ball speed variable.
Example 8: The method according to any one of the preceding Examples, wherein the set of variables includes a loft variable.
Example 9: The method according to any one of the preceding Examples, wherein the shaft type of the golf club (4) is categorized as one or more of: a low-, a mid-, or a high-launch type, and a low-, a mid-, or a high-spin type.
Example 10: The method according to any one of the preceding Examples, wherein a characteristic of the head of the golf club (4) relates to spin capability of the head of the golf club (4).
Example 11: The method according to any one of the preceding Examples, wherein said one or more recommendations include advising the golf player (3) to try a golf club with a specific shaft type, such as a medium-launch, high-spin shaft.
Example 12: The method according to any one of the preceding Example, wherein the golf club (4) is a driver golf club.
Example 13: A computer (110) configured for managing fitting between a golf club (4) and a golf player (3), wherein the computer (110) is configured for:
   obtaining access to a physics model that defines interdependencies among a set of variables, being measurable by a tracking device (140), relating to shots of golf balls, wherein the set of variables includes a ball spin variable, a ball speed variable, a ball launch angle variable, and a ball distance variable,
   obtaining a measured ball speed, a measured ball launch angle, and a measured ball distance, which have been obtained by the tracking device (140), wherein the measured ball speed, the measured ball launch angle, and the measured ball distance relate to a set of observed golf shots, performed by the golf player (3),
   computing a ball spin, referred to as "computed ball spin", by use of the physics model, the measured ball speed, the measured ball launch angle and the measured ball distance,
   using at least one of the computed ball spin and the measured ball launch angle as an input to a fitting model that defines interdependencies among a set of parameters for the measured ball speed, wherein the set of parameters includes a ball launch angle parameter, a ball spin parameter, and a distance parameter, and
   generating one or more recommendations regarding the golf club and/or one or more swings performed by the golf player (3) when making the set of observed golf shots based on the fitting model, wherein said one or more recommendations include adjustments related to one or more of: a loft of the golf club (4), a shaft type of the golf club (4), a characteristic of a head of the golf club (4), and said one or more swings,
   wherein the computer (110) is configured for generating said one or more recommendations iteratively to evaluate one or more subsequent golf shots, performed by the golf player (3) after the observed set of golf shots, until a difference between two or more of the measured ball distance, the maximum distance and a subsequent measured ball distance for said one or more subsequent golf shots satisfies a threshold relating to the measured ball distance and/or the subsequent measured ball distance and/or the maximum distance.
Example 14: The computer (110) according to the preceding Example, wherein the computer (110) is configured for
   providing said one or more recommendations by being configured for:
   displaying said one or more recommendations at a display device (120), and/or
   sending, to a golf club managing unit (130), said one or more recommendations, wherein the golf club managing unit (130) is configured to provide a golf club according to said one or more recommendations, whereby the golf club becomes accessible to the golf player (3) for testing thereof.
Example 15: A computer program (403), comprising computer readable code units which when executed on a computing apparatus (110) causes the computing apparatus (110) to perform the method according to Example 1-12.
Example 16: A carrier (405) comprising the computer program according to the preceding Examples, wherein the carrier (405) is one of an electronic signal, an optical signal, a radio signal and a computer readable medium.

## Claims

1. A method, performed by a computer (110), for managing fitting between a golf club (4) and a golf player (3), wherein the method comprises
obtaining (A105) access to a physics model that defines interdependencies among a set of variables, being measurable by a tracking device (140), relating to shots of golf balls, wherein the set of variables includes a ball spin variable, a ball speed variable, a ball launch angle variable, and a ball distance variable,
obtaining (A110) a measured ball speed, a measured ball launch angle, and a measured ball distance, which have been obtained by the tracking device (140), wherein the measured ball speed, the measured ball launch angle, and the measured ball distance relate to a set of observed shots, performed by the golf player (3),
computing (A120) a ball spin, referred to as "computed ball spin", by use of the physics model, the measured ball speed, the measured ball launch angle and the measured ball distance,
using (A130) at least one of the computed ball spin and the measured ball launch angle as an input to a fitting model that defines interdependencies among a set of parameters for the measured ball speed, wherein the set of parameters includes a ball launch angle parameter, a ball spin parameter, and a distance parameter, wherein the ball launch angle parameter and the ball spin parameter are adjustable to achieve a maximum distance, and
generating (A140) one or more recommendations regarding the golf club and/or one or more swings performed by the golf player (3) when making the set of observed golf shots based on the fitting model, wherein the one or more recommendations include adjustments related to one or more of: a loft of the golf club (4), a shaft type of the golf club (4), a characteristic of a head of the golf club (4), or the one or more swings,
wherein the generating (A150) of the one or more recommendations is performed iteratively to evaluate one or more subsequent golf shots, performed by the golf player (3) after the set of observed golf shots, until a difference between two or more of the measured ball distance, the maximum distance and a subsequent measured ball distance for the one or more subsequent golf shots satisfies a threshold relating to the measured ball distance and/or the subsequent measured ball distance and/or the maximum distance.

2. The method according to claim 1, wherein the method comprises:
providing (A150) the one or more recommendations, wherein the providing (A150) comprises one or more of:
displaying (A152) the one or more recommendations at a display device (120), and
sending (A155), to a golf club managing unit (130), the one or more recommendations, wherein the golf club managing unit (130) is configured to provide a golf club according to the one or more recommendations, whereby the golf club becomes accessible to the golf player (3) for testing thereof.

3. The method according to any one of the preceding claims, wherein the ball distance variable comprises a ball carry distance variable and/or a shot distance variable.

4. The method according to any one of the preceding claims, wherein the measured ball distance refers to a measured ball carry distance and/or a measured shot distance.

5. The method according to any one of the preceding claims, wherein the maximum distance refers to a maximum carry distance and/or a maximum shot distance.

6. The method according to any one of the preceding claims, wherein the threshold refers to a first threshold for maximum allowed carry distance difference and/or a second threshold for maximum allowed shot distance difference.

7. The method according to any one of the preceding claims, wherein the physics model defines the interdependencies among the set of variables except the ball speed variable, for each ball speed value of a set of ball speed values selected for the ball speed variable.

8. The method according to any one of the preceding claims, wherein the set of variables includes a loft variable.

9. The method according to any one of the preceding claims, wherein the shaft type of the golf club (4) is categorized as one or more of: a low-, a mid-, or a high-launch type, and a low-, a mid-, or a high-spin type.

10. The method according to any one of the preceding claims, wherein a characteristic of the head of the golf club (4) relates to spin capability of the head of the golf club (4).

11. The method according to any one of the preceding claims, wherein the one or more recommendations include advising the golf player (3) to try a golf club with a specific shaft type, such as a medium-launch, high-spin shaft.

12. The method according to any one of the preceding claims, wherein the golf club (4) is a driver golf club.

13. The method according to any one of the preceding claims, wherein the fitting model comprises a swing fitting model for modelling of how to adjust swinging as performed by the golf player (3) of the golf club (4), wherein the generating of the one or more recommendations includes a recommendation regarding an adjustment related to a swing performed by the golf player (3).

14. A computer (110) configured for managing fitting between a golf club (4) and a golf player (3), wherein the computer (110) is configured to perform the operations of the method of any one of claims 1 to 13.

15. A computer program (403), comprising computer readable code units which when executed on a computing apparatus (110) causes the computing apparatus (110) to perform the method according to claim 1-13.
